(19) Europäisches Patentamt / European Patent Office / Office européen des brevets

(11) **EP 3 132 418 B1**

(12) **EUROPEAN PATENT SPECIFICATION**

(45) Date of publication and mention
of the grant of the patent:
**09.10.2019 Bulletin 2019/41**

(21) Application number: **14796777.2**

(22) Date of filing: **13.11.2014**

(51) Int Cl.:
**G06T 5/00** (2006.01)     **G06T 5/50** (2006.01)

(86) International application number:
**PCT/EP2014/074495**

(87) International publication number:
**WO 2016/074725 (19.05.2016 Gazette 2016/20)**

(54) **NON LOCAL IMAGE DENOISING**

NICHTLOKALE BILDRAUSCHUNTERDRÜCKUNG

SUPPRESSION NON-LOCALE DU BRUIT D'IMAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**22.02.2017 Bulletin 2017/08**

(73) Proprietor: **Huawei Technologies Co. Ltd.
Shenzhen, Guangdong 518129 (CN)**

(72) Inventors:
- **URFALIOGLU, Onay**
  **80992 Munich (DE)**
- **HALFAOUI, Ibrahim**
  **80992 Munich (DE)**
- **CORDARA, Giovanni**
  **80992 Munich (DE)**

(74) Representative: **Gill Jennings & Every LLP
The Broadgate Tower
20 Primrose Street
London EC2A 2ES (GB)**

(56) References cited:
**US-A1- 2010 141 804**

- **JOSE V. MANJON ET AL: "Adaptive non-local means denoising of MR images with spatially varying noise levels", JOURNAL OF MAGNETIC RESONANCE IMAGING, vol. 31, no. 1, 20 December 2009 (2009-12-20), pages 192-203, XP055025710, ISSN: 1053-1807, DOI: 10.1002/jmri.22003**

- **YOUSAI ZHANG - ET AL: "Image Denoising based on Adaptive BM3D and Singular Value Decomposition", INTERNATIONAL JOURNAL OF ADVANCEMENTS IN COMPUTING TECHNOLOGY, vol. 5, no. 6, 31 March 2013 (2013-03-31), pages 859-865, XP055182859, ISSN: 2005-8039, DOI: 10.4156/ijact.vol5.issue6.101**

- **ABDUL REHMAN ET AL: "SSIM-based non-local means image denoising", IMAGE PROCESSING (ICIP), 2011 18TH IEEE INTERNATIONAL CONFERENCE ON, IEEE, 11 September 2011 (2011-09-11), pages 217-220, XP032080071, DOI: 10.1109/ICIP.2011.6116065 ISBN: 978-1-4577-1304-0**

- **Antoni Buades ET AL: "IPOL: Non-local Means Denoising", , 27 December 2011 (2011-12-27), pages 1-5, XP055183234, http://www.ipol.im/pub/algo/bcm_non_local_ means_denoising DOI: 10.1109/CVPR.2005.38 Retrieved from the Internet: URL:https://web.archive.org/web/20111227020446/http://www.ipol.im/pub/algo/bcm_non_local_means_denoising/ [retrieved on 2015-04-15]**

- **DABOV K ET AL: "Image Denoising by Sparse 3-D Transform-Domain Collaborative Filtering", IEEE TRANSACTIONS ON IMAGE PROCESSING, IEEE SERVICE CENTER, PISCATAWAY, NJ, US, vol. 16, no. 8, 1 August 2007 (2007-08-01) , pages 2080-2095, XP011485829, ISSN: 1057-7149, DOI: 10.1109/TIP.2007.901238**

- **KOSTADIN DABOV ET AL: "Image denoising with block-matching and 3D filtering", PROCEEDINGS OF SPIE, vol. 6064, 2 February 2006 (2006-02-02), XP055182239, ISSN: 0277-786X, DOI: 10.1117/12.643267**

**Description**

TECHNICAL FIELD

The invention relates to the field of digital image processing, in particular to de-noising of digital images.

BACKGROUND

In digital image processing applications, noise reduction is an important task. Although modern digital image sensors may provide an improved image quality, noise may still be present in digital images e.g. due to physical effects and limitations of the digital images sensors. In particular for smart-phone cameras, noise removal can be more challenging because of a decreased pixel size of the digital image sensors.

Algorithmic solutions for an effective noise reduction can be applied in order to recover de-noised digital images with an improved visual quality. Different techniques can be used for noise reduction, e.g. block-based methods, transform domain methods, machine learning based methods, spatial domain methods, and/or hybrid methods. For example, block-based methods can take advantage of a similarity of small blocks inside the digital image of interest.

In K. Dabov, A. Foi, V. Katvonik, and K. Egiazarian, "Image Denoising by Sparse 3D Transform-Domain Collaborative Filtering," IEEE Image Processing, vol. 16, no. 8, pp. 2080-2095, 2007, an approach for de-noising a digital image is described.

In A. Buades, B. Coll, J. M. Morel, "A non-local algorithm for image denoising", IEEE Computer Vision and Pattern Recognition 2005, Vol. 2, pp. 60-65, 2005, a further approach for de-noising a digital image is described.

SUMMARY

It is an object of the invention to provide an efficient concept for processing a digital image, and in particular an efficient concept for processing a digital image enabling improved block matching and noise reduction performance.

This object is achieved by the features of the independent claims. Further implementation forms are apparent from the dependent claims, the description and the figures.

Aspects and implementation forms of the invention are based on the finding that common approaches usually assume a stationary noise distribution and/or a Gaussian noise distribution with a constant single standard deviation across the entire digital image. However, in practice, this assumption is typically not valid. Therefore, common approaches may suffer from a reduced block matching and noise reduction performance.

Aspects and implementation forms of the invention are further based on the finding that noise statistics within the digital image can depend on local properties of the digital image, e.g. image feature measures such as intensity, luminosity or texture. Thus, a non-stationary noise model is suggested, wherein the noise statistics may not evince the same standard deviation across the entire digital image.

For processing the digital image, a block matching within the digital image can be performed, wherein a plurality of similar blocks with regard to a reference block can be determined upon the basis of a plurality of similarity measures indicating a similarity between corresponding noise distributions. Therefore, a non-stationary noise model can be considered when processing the digital image. Based on the block matching, an efficient filtering and denoising of the digital image can be performed to provide a de-noised digital image.

According to a first aspect, the invention relates to an image processing apparatus for processing a digital image, the digital image comprising a reference block and a plurality of further blocks, the image processing apparatus comprising a determiner being configured to determine a plurality of similarity measures between the reference block and the plurality of further blocks, wherein each similarity measure indicates a similarity between a noise distribution in the reference block and a noise distribution in a further block of the plurality of further blocks, the determiner being further configured to determine a plurality of similar blocks from the plurality of further blocks upon the basis of the plurality of similarity measures. Thus, an efficient concept for processing a digital image can be realized.

The image processing apparatus can enable an efficient block matching within digital images, wherein the digital images may e.g. comprise non-stationary Gaussian noise.

The term "plurality" can refer to "one or more". That is, the plurality of further blocks can be one or more further blocks, the plurality of similarity measures can be one or more similarity measures, and the plurality of similar blocks can be one or more similar blocks.

In a first implementation form of the image processing apparatus according to the first aspect as such, each similarity measure further indicates a similarity between an intensity distribution in the reference block and an intensity distribution in the further block of the plurality of further blocks. Thus, the plurality of similarity measures can indicate a similarity of noise distributions as well as a similarity of intensity distributions.

Each similarity measure can indicate a quadratic distance between the intensity distribution in the reference block and the intensity distribution in the further block.

In a second implementation form of the image processing apparatus according to the first aspect as such or any preceding implementation form of the first aspect, the determiner is configured to partition the digital image into a plurality of blocks, and to determine the reference block and the plurality of further blocks from the plurality of blocks. Thus, a partitioning of the digital image can be realized efficiently.

The reference block and the plurality of further blocks can be over-lapping.

In a third implementation form of the image processing apparatus according to the first aspect as such or any preceding implementation form of the first aspect, a size of the reference block and a size of a further block of the plurality of further blocks are equal, or a reference block and/or a further block of the plurality of further blocks is rectangular. Thus, an efficient processing of the reference block and the plurality of further blocks can be realized.

The reference block and/or the further block of the plurality of further blocks can be square and may e.g. comprise k x k pixels.

In a fourth implementation form of the image processing apparatus according to the first aspect as such or any preceding implementation form of the first aspect, the plurality of further blocks is arranged within a search window area associated with the reference block, wherein the search window area comprises the reference block, and wherein the search window area has a predetermined size. Thus, the plurality of similar blocks can be determined efficiently.

The plurality of further blocks and/or the plurality of similar blocks can be arranged in vicinity to the reference block.

In a fifth implementation form of the image processing apparatus according to the first aspect as such or any preceding implementation form of the first aspect, the determiner is configured to determine a reference noise indicator indicating the noise distribution in the reference block, to determine a plurality of further noise indicators indicating the noise distributions in the plurality of further blocks, and to combine the reference noise indicator with the plurality of further noise indicators to determine the plurality of similarity measures between the reference block and the plurality of further blocks. Thus, the plurality of similarity measures can be determined efficiently.

The reference noise indicator can indicate a standard deviation of the noise distribution in the reference block. The plurality of further noise indicators can indicate standard deviations of the noise distributions in the plurality of further blocks.

Combining the reference noise indicator with the plurality of further noise indicators can comprise subtracting the plurality of further noise indicators from the reference noise indicator. Combining the reference noise indicator with the plurality of further noise indicators can further comprise determining an absolute value of the difference. Combining the reference noise indicator with the plurality of further noise indicators can further comprise multiplying the absolute value by a predetermined scaling factor.

In a sixth implementation form of the image processing apparatus according to the fifth implementation form of the first aspect, the determiner is configured to determine a reference image feature measure, in particular an average intensity, of the reference block, to determine a plurality of further image feature measures, in particular average intensities, of the plurality of further blocks, to determine the reference noise indicator upon the basis of the reference image feature measure, and to determine the plurality of further noise indicators upon the basis of the plurality of further image feature measures. Thus, local properties of the digital image can be considered.

The reference image feature measure and/or the plurality of further image feature measures can further be an average gradient or an average luminosity.

In a seventh implementation form of the image processing apparatus according to the sixth implementation form of the first aspect, the image processing apparatus further comprises a memory, wherein the memory is configured to store a plurality of stored image feature measures and a plurality of stored noise indicators, wherein each stored image feature measure is associated with a stored noise indicator, and wherein the determiner is configured to compare the reference image feature measure and/or a further image feature measure with the plurality of stored image feature measures in the memory, and to retrieve a stored noise indicator from the memory being associated with a stored image feature measure corresponding to the reference image feature measure and/or the further image feature measure. Thus, a pre-stored mapping of image feature measures to noise indicators can be used in order to determine the noise indicators. The pre-stored mapping can e.g. be implemented using a look-up table in the memory.

In an eighth implementation form of the image processing apparatus according to the seventh implementation form of the first aspect, the image processing apparatus further comprises a further determiner, wherein the further determiner is configured to determine a plurality of image feature measures and a plurality of noise indicators upon the basis of a plurality of further digital images, wherein each image feature measure is associated with a noise indicator, and wherein the further determiner is configured to store the determined plurality of image feature measures and the determined plurality of noise indicators in the memory. Thus, an offline pre-calculation of the pre-stored mapping can be realized.

The further determiner can be configured to perform a statistical analysis upon the basis of the plurality of further digital images. The further determiner can be configured to derive an image feature measure to noise indicator mapping.

In a ninth implementation form of the image processing apparatus according to the first aspect as such or any preceding implementation form of the first aspect, the image processing apparatus further comprises a de-noising filter, the de-noising filter being configured to arrange the reference block and the plurality of similar blocks to form a 3-dimensional array, and to collaboratively filter the 3-dimensional array to obtain a filtered reference block and a plurality of filtered similar blocks. Thus, an efficient filtering of the reference block and the plurality of similar blocks can be realized.

The image processing apparatus can provide an efficient filtering of digital images, wherein the digital images can e.g. comprise non-stationary Gaussian noise. The filtering can be performed in 3 dimensions. The filtering can comprise a hard threshold filtering and/or a Wiener filtering.

In a tenth implementation form of the image processing apparatus according to the ninth implementation form of the first aspect, the determiner is configured to determine a reference noise indicator indicating the noise distribution in the reference block, and to determine a plurality of further noise indicators indicating the noise distributions in the plurality of further blocks, wherein the de-noising filter is configured to collaboratively filter the 3-dimensional array upon the basis of the reference noise indicator associated with the reference block and further noise indicators associated with the plurality of similar blocks. Thus, noise distributions in the reference block and in the plurality of similar blocks can be considered. Consequently, a modified hard threshold filtering and/or a modified Wiener filtering can be employed.

In an eleventh implementation form of the image processing apparatus according to the ninth implementation form or the tenth implementation form of the first aspect, the de-noising filter is configured to transform the 3-dimensional array from a spatial domain into a transform domain to obtain a transformed 3-dimensional array, to collaboratively filter the transformed 3-dimensional array in the transform domain to obtain a filtered transformed 3-dimensional array, and to inversely transform the filtered transformed 3-dimensional array from the transform domain into the spatial domain to obtain the filtered reference block and the plurality of filtered similar blocks. Thus, the filtering can be performed efficiently.

The transform domain can be a spatial frequency domain. The transformation can be performed upon the basis of a discrete Fourier transform (DFT) or a fast Fourier transform (FFT). The inverse transformation can be performed upon the basis of an inverse discrete Fourier transform (IDFT) or an inverse fast Fourier transform (IFFT).

The collaborative filtering in the transform domain, e.g. the hard threshold filtering or Wiener filtering, can be performed on coefficients of the 3-dimensional array in the transform domain.

In a twelfth implementation form of the image processing apparatus according to the ninth implementation form to the eleventh implementation form of the first aspect, the image processing apparatus further comprises a combiner, the combiner being configured to combine the filtered reference block with the plurality of filtered similar blocks to obtain a de-noised digital image. Thus, a de-noised digital image can be provided efficiently.

The image processing apparatus can enable an efficient de-noising of digital images, wherein the digital images can e.g. comprise non-stationary Gaussian noise.

The combining can comprise a weighting of the filtered reference block and/or the plurality of filtered similar blocks upon the basis of associated similarity measures. The combining can realize an aggregation weighting.

In a thirteenth implementation form of the image processing apparatus according to the twelfth implementation form of the first aspect, the determiner is configured to determine a reference position indicator indicating a position of the reference block within the digital image, and to determine a plurality of position indicators indicating positions of the plurality of similar blocks within the digital image, and the combiner is configured to combine the filtered reference block with the plurality of filtered similar blocks upon the basis of the determined reference position indicator and the determined plurality of position indicators. Thus, an efficient combination of the filtered reference block with the plurality of filtered similar blocks can be realized.

The reference position indicator and/or the plurality of position indicators can comprise a pixel coordinate within the digital image.

According to a second aspect, the invention relates to a method for processing a digital image, the digital image comprising a reference block and a plurality of further blocks, the method comprising determining a plurality of similarity measures between the reference block and the plurality of further blocks, wherein each similarity measure indicates a similarity between a noise distribution in the reference block and a noise distribution in a further block of the plurality of further blocks, and determining a plurality of similar blocks from the plurality of further blocks upon the basis of the plurality of similarity measures. Thus, an efficient concept for processing a digital image can be realized.

First to thirteenth implementation forms of the second aspect correspond to the first to thirteenth implementation forms of the first aspect.

The method can be performed by the image processing apparatus. Further features of the method can directly result from the functionality of the image processing apparatus.

According to a third aspect, the invention relates to a computer program comprising a program code for performing the method according to the second aspects or any of the implementation forms of the second aspect when executed on a computer. Thus, the method can be performed automatically.

The image processing apparatus, e.g. the determiner, the de-noising filter, the combiner and/or the further determiner, can be programmably arranged to perform the computer program.

According to a fourth aspect, the functionalities of the image processing apparatus, e.g. the determiner, the de-noising filter, the combiner and/or the further determiner, can be arranged to be implemented in a single processor or in different processors, e.g. each in a different processor.

First to thirteenth implementation forms of the fourth aspect correspond to the first to thirteenth implementation forms of the first aspect.

Aspects and implementation forms of the invention can be implemented in hardware and/or software.

SHORT DESCRIPTION OF EMBODIMENTS

Embodiments of the invention will be described with respect to the following figures, in which:

Fig. 1 shows a diagram of an image processing apparatus for processing a digital image according to an embodiment;

Fig. 2 shows a diagram of a method for processing a digital image according to an embodiment;

Fig. 3 shows a diagram of an image processing apparatus for processing a digital image according to an embodiment;

Fig. 4 shows a diagram of a determiner for determining a plurality of similarity measures between a reference block and a plurality of further blocks according to an embodiment;

Fig. 5 shows a diagram of a digital image and a 3-dimensional array according to an embodiment;

Fig. 6 shows a diagram of collaboratively filtering a 3-dimensional array by a de-noising filter according to an embodiment;

Fig. 7 shows a diagram of a de-noising filter for collaboratively filtering a 3-dimensional (3D) array according to an embodiment;

Fig. 8 shows a diagram of combining a filtered reference block with a plurality of filtered similar blocks by a combiner to obtain a de-noised digital image;

Fig. 9 shows a diagram of a further determiner for determining a plurality of image feature measures and a plurality of noise indicators upon the basis of a plurality of further digital images according to an embodiment; and

Fig. 10 shows a diagram of a plurality of stored image feature measures and a plurality of stored noise indicators being arranged to form a measure-to-noise map according to an embodiment.

DETAILED DESCRIPTION OF EMBODIMENTS

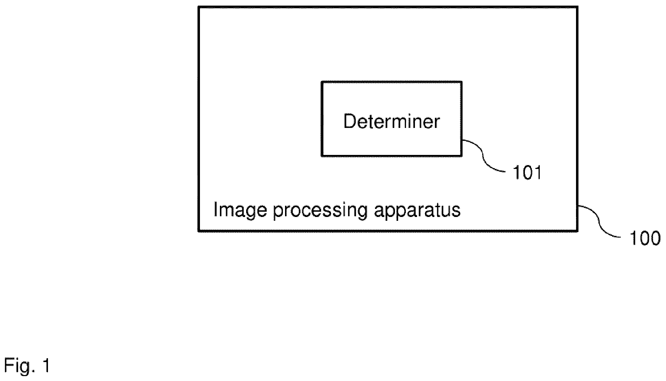

Fig. 1 shows a diagram of an image processing apparatus 100 for processing a digital image according to an embodiment. The digital image comprises a reference block and a plurality of further blocks.

The image processing apparatus comprises a determiner 101 being configured to determine a plurality of similarity measures between the reference block and the plurality of further blocks, wherein each similarity measure indicates a similarity between a noise distribution in the reference block and a noise distribution in a further block of the plurality of further blocks, the determiner 101 being further configured to determine a plurality of similar blocks from the plurality of further blocks upon the basis of the plurality of similarity measures.

The image processing apparatus 100 can further comprise a de-noising filter, the de-noising filter being configured to arrange the reference block and the plurality of similar blocks to form a 3-dimensional array, and to collaboratively filter the 3-dimensional array to obtain a filtered reference block and a plurality of filtered similar blocks.

The image processing apparatus 100 can further comprise a combiner, the combiner being configured to combine the filtered reference block with the plurality of filtered similar blocks to obtain a de-noised digital image.

The image processing apparatus 100 can further comprise a further determiner, wherein the further determiner is configured to determine a plurality of image feature measures and a plurality of noise indicators upon the basis of a plurality of further digital images, wherein each image feature measure is associated with a noise indicator, and wherein the further determiner is configured to store the determined plurality of image feature measures and the determined plurality of noise indicators in a memory.

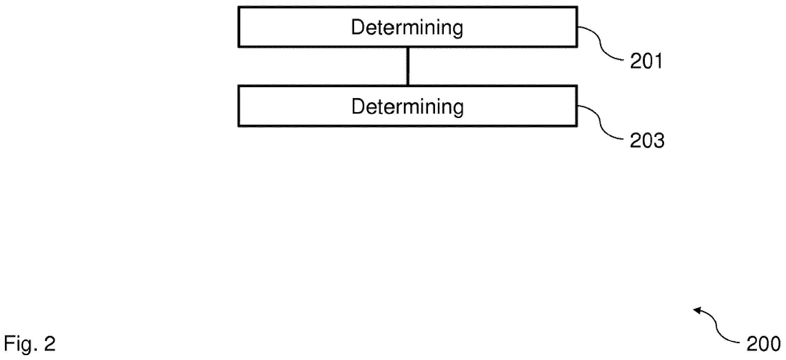

Fig. 2 shows a diagram of a method 200 for processing a digital image according to an embodiment. The digital image comprises a reference block and a plurality of further blocks.

The method 200 comprises determining 201 a plurality of similarity measures between the reference block and the plurality of further blocks, wherein each similarity measure indicates a similarity between a noise distribution in the reference block and a noise distribution in a further block of the plurality of further blocks, and determining 203 a plurality of similar blocks from the plurality of further blocks upon the basis of the plurality of similarity measures.

The method 200 can be performed by the image processing apparatus 100.

In the following, further implementation forms and embodiments of the image processing apparatus 100 and the method 200 are described in more detail.

Embodiments of the invention can relate to the field of computer vision and computational photography, in particular to visual quality enhancement and noise reduction in digital images and videos, e.g. recorded by digital cameras or mobile phones.

Embodiments of the invention can be applied for a block-based de-noising of a digital image comprising non-stationary Gaussian noise.

Embodiments of the invention can address the topic of digital image de-noising. Many noise types can corrupt a quality of digital images e.g. recorded by digital cameras, e.g. photon shot noise caused by quantum fluctuations of light, fixed pattern noise due to hardware deficiencies, dark current noise caused by heat, amplifier noise, and/or quantization noise.

Noise reduction within digital images can be an important task in many applications. Although modern digital image sensors can provide an improved image quality, noise may not be avoided due to physical limitations, e.g. of an underlying capturing system. The challenge can even become more noticeable since digital image sensor manufacturers may tend to pack an increasing pixel number per unit area. In particular for smart-phone cameras, noise removal can be more challenging because of a decreased pixel size.

Algorithmic solutions for an effective noise reduction can be applied to recover de-noised digital images with an improved visual quality. Different techniques can be used for noise reduction, e.g. block-based methods, transform domain methods, machine learning based methods, spatial domain methods, and/or hybrid methods. Despite the amount of work done in this domain, noise in digital images and videos is still a challenge to be solved in computational photography.

Block-based approaches such as BM3D, NLM or UINTA and optimal spatial adaptation techniques can be efficient. Block-based methods can e.g. take advantage of a similarity of small blocks inside the digital image of interest. An exemplary structure of block-based approaches comprises the following three steps:

Firstly, a block matching (BM) can aim to find a plurality of similar blocks for every selected reference block in the digital image. These blocks can be stacked over each other in order to form a 3-dimensional (3D) array.

Secondly, a collaborative filtering exploiting block redundancy and/or block similarity can apply various filtering techniques. An elimination of noise components can e.g. be realized considering redundancy among the blocks of each 3-dimensional (3D) array. Once filtered, the de-noised blocks can be moved to their original positions in the digital image.

Thirdly, an aggregation can be performed. After the blocks are re-positioned into their original positions within the digital image, appropriate weights can be applied in order to estimate final pixel intensities in possibly overlapping areas within the digital image. The assigned weights may generally depend on the filtering technique used in the previous step.

A specific approach for block matching in 3D with de-noising is denoted as BM3D. It can follow the steps described above, wherein the block matching (BM) can give a set of 3D arrays of similar blocks with their stored position coordinates as output. The collaborative filtering can then be performed. A 3D transform can firstly be applied, followed by a filtering operation using a threshold operator and/or a statistical filtering. Ultimately, a re-conversion of noise-reduced blocks into the spatial domain can be achieved by an application of an inverse 3D transform. As a result, a set of 3D arrays with noise-reduced blocks can be regained after collaborative filtering. The aggregation can finally be realized, wherein the estimated noise-reduced blocks in the 3D arrays can be scattered back to their original positions in the digital image with an appropriate weighting of the overlapping blocks.

A further specific approach for non-local means de-noising is denoted as NLM. This approach can follow the steps described above, wherein block matching can be realized depending not on a spatial proximity of considered blocks to the reference block but rather on a similarity of their neighborhoods. Filtering can then be performed in spatial domain without an application of 3D transforms and aggregation weights can be proportional to the block matching similarity measures indicating a neighborhood similarity.

These approaches assume a stationary noise distribution and/or a Gaussian noise distribution with a constant single standard deviation across the digital image. In practice, this assumption may not be valid, e.g. based on analyses on implemented digital image sensors.

In fact, the noise statistics can depend on image features of the digital image, e.g. luminosity and texture of the digital image, which may suggest a non-stationary noise model. In other words, in real world scenarios, noise statistics may not evince the same standard deviation across the entire digital image. Many factors, for example a luminosity of a scene, a gradient change or local textural information can contribute to noise characteristics across the same digital image. As a result, also the standard deviation of Gaussian noise can be regarded as being dependent on such factors denoted as image feature measures.

Embodiments of the invention can apply a non-local de-noising algorithm aiming at adaptively treating real non-stationary Gaussian noise. The de-noising approach can be block-based and can comprise three steps, namely block matching (BM), filtering, and aggregation. The steps can be modified in order to efficiently remove non-stationary Gaussian noise from the digital image.

In the block matching (BM), a modification of a similarity criterion can be performed e.g. by adding an additional term taking into consideration noise characteristics, e.g. to obtain a similar standard deviation between the reference block and a similar block. In the filtering, a modification can be performed by adaptively using a noise level, e.g. a standard deviation, of the block at hand, instead of using a globally constant standard deviation. In the aggregation, a weighting can be applied adaptively according to the noise level, e.g. standard deviation, of the overlapping blocks. The modifications can result in an improved performance e.g. in terms of an image noise reduction in digital images captured by mobile phones and cameras.

In specific approaches, it is assumed that image noise can be described by a stationary Gaussian distribution with a constant standard deviation $\sigma$. This may lead to a sub-optimal noise removal performance because the applied statistics may not properly model the real image noise. In practice, an examination of noise characteristics usually shows a non-stationary Gaussian distribution, wherein the noise level can depend on specific image feature measures, e.g. intensity. Other image feature measures can be an intensity gradient or a local texture of the digital image. In the following, such criteria are denoted as image feature measures.

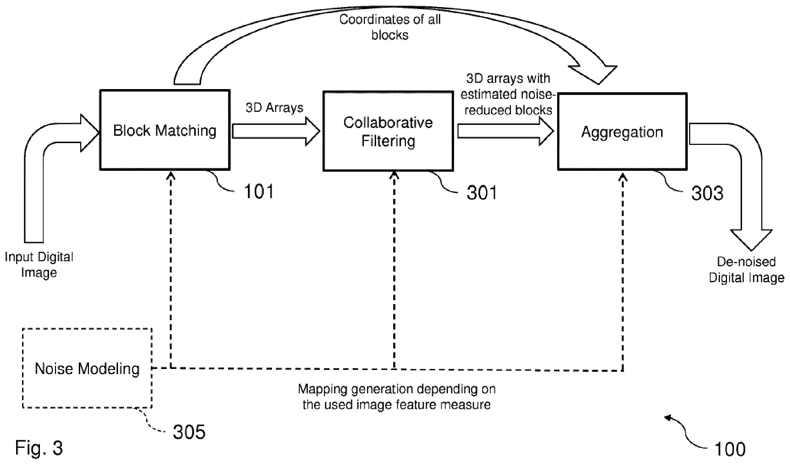

Fig. 3 shows a diagram of an image processing apparatus 100 for processing a digital image according to an embodiment. The diagram further illustrates a flowchart for a de-noising approach. The image processing apparatus 100 forms a possible implementation of the image processing apparatus as described in conjunction with Fig. 1.

The image processing apparatus 100 comprises a determiner 101, a de-noising filter 301, a combiner 303, and a further determiner 305. The determiner 101 can be configured to perform a block matching (BM) within an input digital image. The de-noising filter 301 can be configured to collaboratively filter 3-dimensional (3D) arrays provided by the determiner 101. The combiner 303 can be configured to perform an aggregation upon the basis of 3-dimensional (3D) arrays with estimated noise-reduced blocks provided by the de-noising filter 301. The aggregation can further be performed upon the basis of coordinates of all blocks provided by the determiner 101. The combiner can be configured to provide a de-noised digital image. The further determiner 305 can be configured to perform a noise modelling for a mapping generation depending on the used image feature measures. The mapping can be provided to the determiner 101, the de-noising filter 301, and/or the combiner 303.

The de-noising approach can comprise the described steps for achieving an adaptive denoising of digital images, wherein the digital images can e.g. comprise non-stationary Gaussian noise. The sequence of operations can be performed as described, wherein the steps can be modified in order to address non-stationary noise statistics apparent in real scenarios.

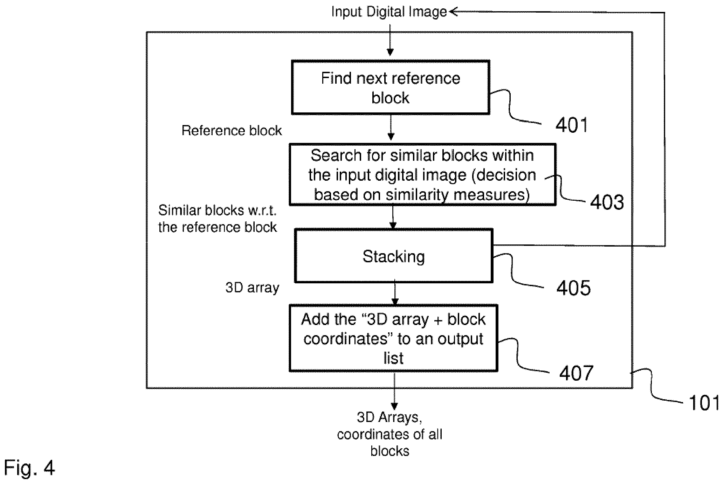

Fig. 4 shows a diagram of a determiner 101 for determining a plurality of similarity measures between a reference block and a plurality of further blocks according to an embodiment. The determiner 101 forms a possible implementation of the determiner 101 as described in conjunction with Fig. 1. The determiner 101 comprises a finder 401, a searcher 403, a stacker 405, and an adder 407. The diagram illustrates a block matching (BM).

The finder 401 can be configured to find a next reference block within the input digital image. The searcher 403 can be configured to search for similar blocks within the input digital image using a reference block, wherein the decision can be based on the similarity measures. The stacker 405 can be configured to stack similar blocks with regard to the reference block to provide a 3-dimensional (3D) array. The adder 407 can add the 3-dimenational (3D) array and block coordinates to an output list to provide the 3-dimenational (3D) arrays and coordinates of all blocks.

A reference block can be chosen within the input digital image by the finder 401. A set of similar blocks with regard to a reference block within the input digital image can be searched by the searcher 403, wherein overlapping blocks can be considered. A decision based on similarity can be performed with respect to a composed similarity criterion. A similarity criterion can e.g. be defined by calculating a quadratic distance between the blocks, e.g. a norm of a pixel-wise difference between two blocks, added to a second term comparing a comprised noise level in both blocks.

A standard deviation defining a noise level of each block can be obtained from a pre-stored mapping using single and/or combinations of image feature measures. As an example, an average intensity value of all pixels in a block can be calculated and a standard deviation from the mapping corresponding to this intensity can be looked for.

The de-noising of a given input digital image can start with the block matching (BM) by the determiner 101. Each digital image can be divided into a fixed number of squared blocks having a fixed size k x k. For each block in the digital image, i.e. reference block in the digital image, an overlapping search can be conducted by the finder 401 in the input digital image within a fixed search window size of n x n pixels, e.g. centered around a position of a reference block. A search can be conducted by the searcher 403 to find the best matching similar blocks within the search window area relevant for each reference block. The selection can be performed by minimizing a similarity measure or similarity metric quantifying a difference between the reference block and the similar block at hand. The similarity measure used for deciding about the similarity can be an average pixel-wise intensity difference of the blocks. However, any other similarity measure can be applied as a first term of the equation.

In order to take into consideration non-stationary noise, a noise level similarity term can be added, comparing noise statistics estimated in different blocks. The noise level can be described by a standard deviation of a noise distribution estimated by a noise modeling performed by the further determiner 305, which can be performed offline.

The similarity measure, realizing a similarity criterion or similarity metric, for block matching (BM) can be determined, for example, according to the following equation:

$$ d(x_r, x_s) = \left[ \sum_{0 < i,j < k} \| x_r(i,j) - x_s(i,j) \|^2 \right] + \alpha \, | \sigma_r - \sigma_s | $$

wherein $x_r$ denotes intensities of a reference block, $x_s$ denotes intensities of a further block, i denotes a pixel position, j denotes a pixel position, k denotes a length or width of a block, $\alpha$ denotes a scaling factor, $\sigma_r$ denotes a standard deviation of a noise distribution of the reference block, $\sigma_s$ denotes a standard deviation of a noise distribution of the further block, and d denotes the similarity measure. The first summand can indicate a quadratic distance between the intensities of the reference block and the intensities of the further block. The second summand can indicate a similarity of a noise distribution of the reference block and a

noise distribution of the further block. Therefore, a pixel-wise calculation of the similarity measure $d(x_r, x_s)$ for all pixels of a block can be performed.

In other words, in order to calculate $d(x_r, x_s)$ between a reference block and a further block under non-stationary noise, a noise distribution similarity measure can be added to an intensity distribution similarity measure. The noise distribution similarity measure can be a weighted difference between a noise level of the reference block and the further block, e.g. difference between the standard deviations defining the noise level of each block.

The scaling factor $\alpha$ can be applied to the difference. The scaling factor can be predetermined. The scaling factor can be constant and can be determined empirically. A suitable scaling factor can e.g. be $\alpha = 0.3$.

A set of similar blocks with regard to the chosen reference block can be stacked over each other by the stacker 405 in order to form a 3-dimensional (3D) array.

For every reference block from the input digital image, a block matching can be realized by the adder 407. The output can be a set of 3D arrays containing similar blocks stored together with their respective position coordinates.

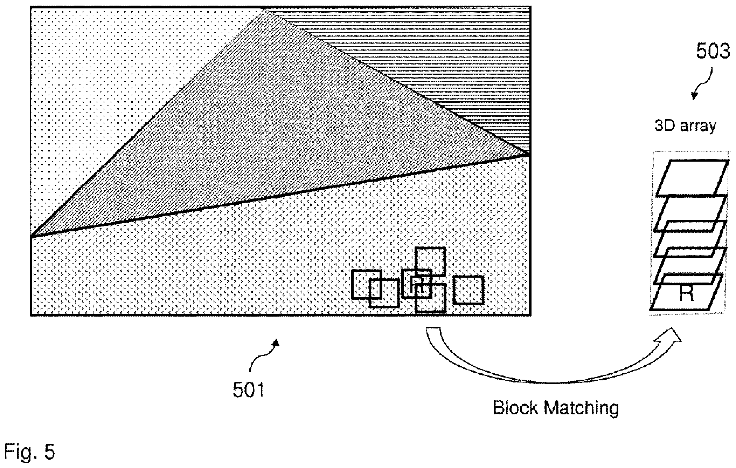

Fig. 5 shows a diagram of a digital image 501 and a 3-dimensional array 503 according to an embodiment. The digital image 501 comprises a reference block indicated as "R", and a plurality of similar blocks, wherein the reference block and the plurality of similar blocks are square. The 3-dimensional array 503 comprises the reference block and the plurality of similar blocks stacked over each other. The diagram illustrates a block matching and a 3D array generation for a single reference block.

A predetermined, e.g. maximum, number N of most similar blocks can be retained for each reference block. These can be gathered and stacked vertically over each other by the stacker 405 forming the 3D array 503. The 3D array 503 can further comprise position coordinates of each block. The choice of the reference block by the finder 401 within the input image digital and the search by the searcher 403 can result in overlapping blocks. The output of the determiner 101 can provide a list of 3D arrays.

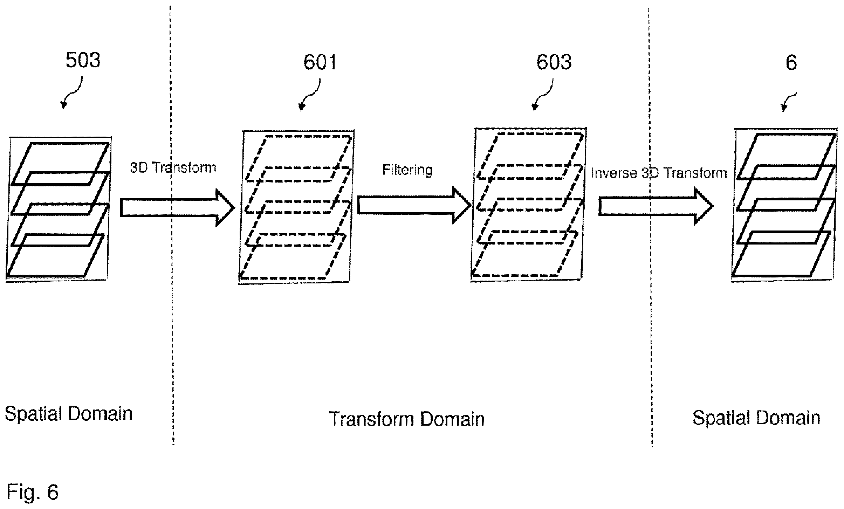

Fig. 6 shows a diagram of collaboratively filtering a 3-dimensional array 503 by a de-noising filter 301 according to an embodiment. The de-noising filter 301 can form a possible implementation of the de-noising filter described in conjunction with Fig. 1. The diagram further comprises a transformed 3-dimensional (3D) array 601, a filtered transformed 3-dimensional (3D) array 603, and a filtered 3-dimenional (3D) array 605.

The de-noising filter 301 can be configured to arrange the reference block and the plurality of similar blocks to form the 3-dimensional (3D) array 503, and to collaboratively filter the 3-dimensional array 503 to obtain a filtered reference block and a plurality of filtered similar blocks.

The de-noising filter 301 can be configured to transform the 3-dimensional (3D) array 503 from a spatial domain into a transform domain to obtain the transformed 3-dimensional (3D) array 601, to collaboratively filter the transformed 3-dimensional (3D) array 601 in the transform domain to obtain the filtered transformed 3-dimensional (3D) array 603, and to inversely transform the filtered transformed 3-dimensional (3D) array 603 from the transform domain into the spatial domain to obtain the filtered 3-dimenional (3D) array 605, wherein the filtered 3-dimenional (3D) array 605 comprises the filtered reference block and the plurality of filtered similar blocks.

The de-noising algorithm can be performed by the de-noising filter 301. The algorithm can comprise several steps for regaining a set of 3D arrays with noise-reduced blocks.

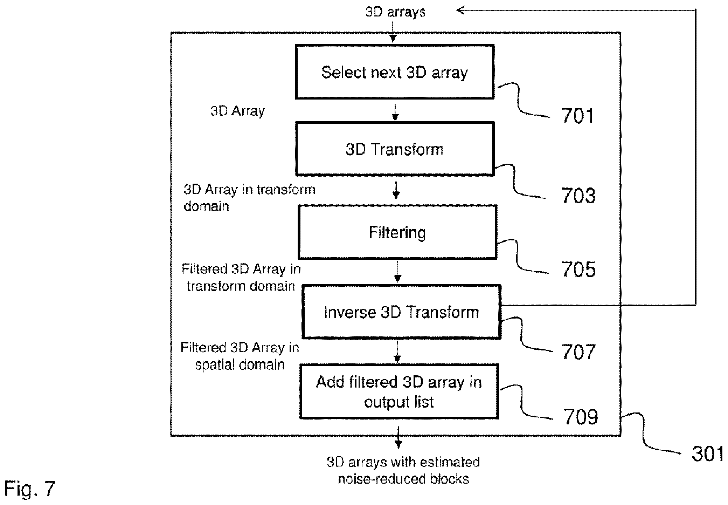

Fig. 7 shows a diagram of a de-noising filter 301 for collaboratively filtering a 3-dimensional (3D) array according to an embodiment. The de-noising filter 301 forms a possible implementation of the de-noising filter 301 as described in conjunction with Fig. 1. The diagram illustrates a collaborative filtering.

The de-noising filter 301 comprises a selector 701, a transformer 703, a filter 705, an inverse transformer 707, and an adder 709. The selector 701 can be configured to select the next 3-dimensional (3D) array from a plurality of 3-dimensional (3D) arrays. The transformer 703 can be configured to perform a 3-dimenional (3D) transform on the 3-dimensional (3D) array. The filter 705 can be configured to filter the 3-dimensional (3D) array in a transform domain. The inverse transformer 707 can be configured to perform an inverse 3-dimensional (3D) transform on the filtered 3-dimensional (3D) array in the transform domain. The adder 709 can be configured to add the filtered 3-dimensinal (3D) array in a spatial domain in an output list to provide 3-dimensional (3D) arrays with estimated noise-reduced blocks.

Firstly, a 3-dimensional (3D) array can be selected by the selector 701 from a set of 3-dimensional (3D) arrays. A 3D transform operation can be applied by the transformer 703 on the 3-dimensional (3D) array, followed by a filtering by the filter 705 to reduce noise components in the blocks, followed by an inverse 3D transform by the inverse transformer 707 to compute the corresponding spatial domain values. The resulting 3-dimensional (3D) array comprising noise-reduced blocks can be added to an output set of 3-dimensional (3D) arrays comprising noise-reduced blocks by the adder 709.

In other words, a single 3-dimensional (3D) array can be selected by the selector 701 from a list resulting after block matching. A sparsity enforcing 3-dimensional (3D) transform can be applied by the transformer 703 on the 3-dimensional (3D) array having the objective of simplifying the filtering. A filtering can be applied by the filter 705 for jointly de-noising the blocks inherent in the 3-dimensinal (3D) arrays e.g. by using threshold mechanisms or statistical filtering mechanisms. This can be carried out by exploiting a redundancy and/or similarity among the blocks. This can further be realized adaptively depending on the reference block standard deviation determined from a measure-to-noise mapping, wherein a measure can be an image feature measure such as gradient, luminosity, and/or color ramp.

A specific part of the approach is introduced for the filter 705 as a modification of the filtering operation used for jointly removing inherent noise by exploiting redundancy between different blocks comprised by the same 3-dimensional (3D) array. Different threshold mechanisms and/or statistical filters can be implemented in an adaptive way depending on the comprised noise in each block. Instead of using a globally constant standard deviation, the approach can be based on a modified threshold mechanism to use the corresponding standard deviation regarding the block at hand. This corresponding level can generally be determined by the block relevant standard deviation, e.g. obtained from a measure-to-noise mapping defined during a noise modeling employed by the further determiner 305.

A modified collaborative filtering using a hard threshold mechanism can be performed according to the following equation:

$$\delta(x) = \begin{cases} 0 & if\ |x| < \lambda_{3D}\sigma_{x_r} \\ x & otherwise \end{cases}$$

wherein x denotes a coefficient in the transform domain, $\lambda_{3D}$ denotes a predetermined threshold factor, $\sigma_{x_r}$ denotes the standard deviation of the corresponding reference block, and $\delta$ denotes a filtered coefficient in the transform domain.

A modified collaborative filtering using a Wiener filtering mechanism can be performed according to the following equation:

$$C_{x_r} = \frac{\|\tau_{3D}(P_{x_r})\|^2}{\|\tau_{3D}(P_{x_r})\|^2 + \sigma_{x_r}}$$

wherein $\tau_{3D}$ denotes a predetermined functional mapping, $P_{x_r}$ denotes a coefficient in the transform domain, $\sigma_{x_r}$ denotes the standard deviation of the corresponding reference block, and $C_{x_r}$ denotes a filtered coefficient in the transform domain.

An inverse 3D transform can be applied by the inverse transformer 707 back on the filtered 3-dimensional (3D) array in order to recover the estimated de-noised blocks. The filtered 3D array comprising the de-noised blocks can be added to an output list by the adder 709. The result can be a set of filtered 3-dimensional (3D) arrays comprising estimated noise-reduced blocks.

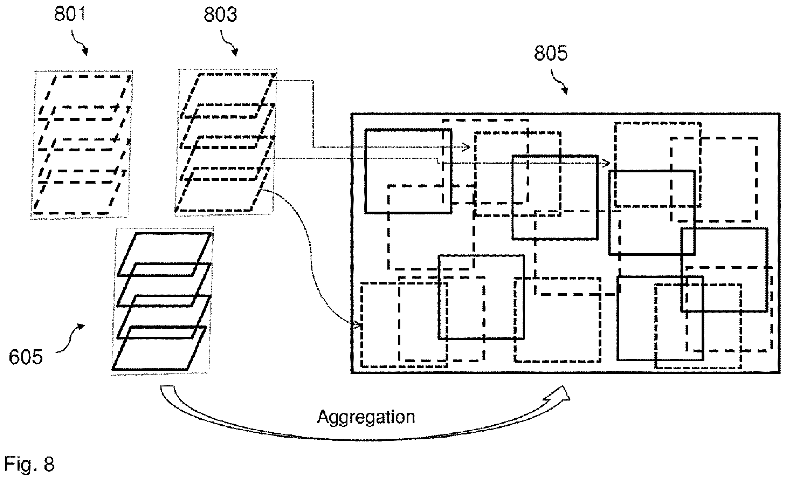

Fig. 8 shows a diagram of combining a filtered reference block with a plurality of filtered similar blocks by a combiner 303 to obtain a de-noised digital image 805. The combiner 303 forms a possible implementation of the combiner 303 as described in conjunction with Fig. 1. The diagram illustrates an aggregation for bringing back noise-reduced blocks to their original positions in the digital image in order to obtain the de-noised digital image 805.

The filtered reference block and the plurality of filtered similar blocks are comprised by a filtered 3-dimensional (3D) array 605. A further filtered reference block and a further plurality of filtered similar blocks are comprised by a further filtered 3-dimensional (3D) array 801. A further filtered reference block and a further plurality of filtered similar blocks are comprised by a further filtered 3-dimensional (3D) array 803.

The aggregation of the de-noising approach can be performed by the combiner 303. Given a set of 3-dimensional (3D) arrays comprising noise-reduced blocks and position coordinates of all blocks, an aggregation of the overlapping resulting de-noised blocks can be realized after scattering them back to their original positions in the digital image. The aggregation can be achieved by assigning appropriate weighting factors to the scattered blocks at every pixel position in the digital image and a corresponding normalization in order to determine an optimal intensity value. The choice of the weights can generally be related to the choice of the filtering mechanism used by the filter 705 within the de-noising filter 301. The aggregation weights can be determined according to the following equations, wherein a constant standard deviation can be replaced by a block dependent standard deviation.

In other words, the filtered estimated noise-reduced blocks in the 3-dimensional (3D) arrays can be scattered back to their original positions within the digital image by the combiner 303. An over-complete representation of the digital image, e.g. because overlapping blocks from different 3-dimensional (3D) arrays corrupt the original digital image, can be recovered since some of them may overlap. An appropriate aggregation can be achieved by awarding a proper weighting for the overlapping blocks in order to estimate pixel values at shared positions.

The aggregation weights can e.g. be determined after a hard threshold filtering mechanism according to the following equation:

$$w_{x_r} = \left\{ \frac{1}{\sigma_{x_r}^2 N_{x_r}} \right\}$$

wherein $\sigma_{xr}$ denotes the standard deviation of the corresponding reference block, $N_{xr}$ denotes a number of zero-valued coefficients in the transform domain, and $w_{xr}$ denotes an aggregation weight.

The aggregation weights can e.g. be determined after a Wiener filtering mechanism according to the following equation:

$$w_{x_r} = \sigma_{x_r}^{-2} \| C_{x_r} \|^{-2}$$

wherein $\sigma_{xr}$ denotes the standard deviation of the corresponding reference block, $C_{xr}$ denotes the filtered coefficient in the transform domain, and $w_{xr}$ denotes an aggregation weight.

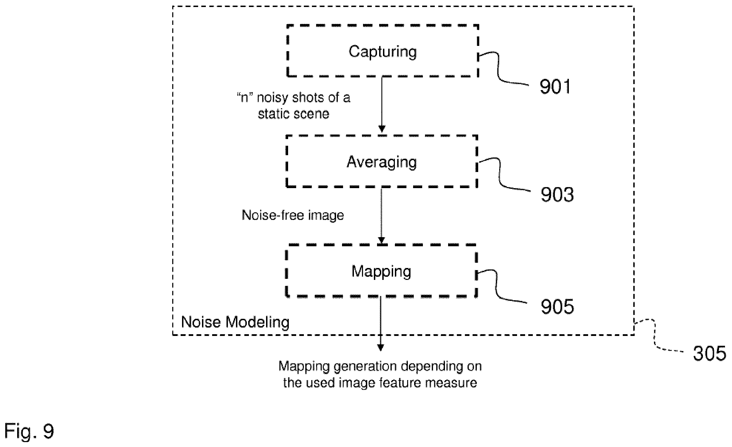

Fig. 9 shows a diagram of a further determiner 305 for determining a plurality of image feature measures and a plurality of noise indicators upon the basis of a plurality of further digital images according to an embodiment. The further determiner 305 forms a possible implementation of the further determiner 305 as described in conjunction with Fig. 1. The diagram illustrates a noise modeling.

The further determiner 305 comprises a capturer 901, an averager 903, and a mapper 905. The capturer 901 can capture the plurality of further digital images to provide n noisy shots of a static scene. The averager 903 can average the noisy shots of the static scene to provide a noise-free digital image. The mapper 905 can perform a mapping generation depending on the used image feature measure.

For evaluating the approach, a pre-processing for noise modeling in digital images can be realized together with a statistical analysis of its properties. It can be aimed to estimate statistical properties, e.g. a standard deviation, provided by real digital image sensors, assuming that real noise is Gaussian distributed. This assumption can be confirmed by the fact that camera noise can originate from many types of noise. Averaging many different types of distributions can tend to approximate a Gaussian distribution, according to the central limit theorem.

The assumption about a noise model described by a single constant standard deviation is reconsidered. In fact, observations confirm that the standard deviation of the noise distribution of image blocks can have a dependency on its local properties, such as an average intensity or an average gradient of the blocks. This can suggest assuming a non-stationary distribution for the digital image noise, which can depend on the block at hand.

Embodiments of the invention are based on an adaptive de-noising of different regions within a single digital image, under an assumption that real noise can present non-stationary statistics and can be tightly correlated to textural, geometrical and local statistics of the region within the digital image.

The statistics of the noise can depend on the nature of the capturing digital image sensor. Therefore, a first step of the approach can comprise a learning phase, in order to estimate a dependency of a standard deviation on a plurality of image feature measures, e.g. luminosity and/or texture. The learning phase can be applied on a testing dataset comprising the further digital images of different properties, e.g. gradient, luminosity and texture, recorded by a set of capturing systems. As a result, a parametric model can be computed which can determine the standard deviation in dependence of the considered block within the digital image. This way, each block can be assigned an individual standard deviation.

For sake of simplicity, an example of a local intensity and noise level correlation is described in more detail. Accordingly, further image feature measures such as gradient, color, and/or textural content can have a corresponding influence on a local noise level within the digital image.

A clustering mechanism can be applied to describe the correlation. When a categorization of the digital image sensor is performed on the basis of luminosity, for example, pixels with similar intensity, e.g. in color-space or grayscale, can be assigned to the same cluster. Every single cluster can be disposed a standard deviation qualifying the corresponding noise level.

The mapping between a luminosity cluster "I" and a standard deviation σ of the noise distribution can be described by:

$$I \mapsto \sigma$$

This can mean that the standard deviation σ can be described as a function:

$$\sigma(I)$$

The de-noising approach can be based on the mapping. Instead of assuming a stationary, constant standard deviation for all blocks, every single block can be treated separately according to its contained intensities and standard deviation. An average standard deviation of a noise distribution in a block can vary according to the considered image feature measures, such as intensity, and/or gradient. This dependence can be described by the mapping from the measures to the standard deviation.

Using intensity as an image feature measure, the average intensity of each block can be calculated. The corresponding standard deviation can be assigned to this value, according to the mapping. The de-noising can be performed block-wise using the assigned standard deviation.

In other words, the pre-processing can be based on a statistical analysis of natural noise properties, e.g. a standard deviation, in the case of real digital image sensors, assuming that noise is Gaussian. This assumption is confirmed by the fact that camera noise can originate from many different types of noise. Averaging many different types of noise distributions tends to approximate a Gaussian noise distribution, according to the central limit theorem. The observations confirm that the standard deviation of the noise distribution of every block has a dependency on its local image feature properties, such as an average intensity or an average gradient of the block. Therefore, embodiments of the invention use a non-stationary noise distribution for the image noise, which depends on the block at hand.

The further determiner 305 can perform the noise modeling, aiming at estimating how the noise statistics vary in real digital image sensors according to different image feature measures, e.g. intensity, gradient, and/or texture. The further determiner 305 can perform an approach for modeling a correlation between non-stationary noise statistics and textural and/or geometrical local features or specificities of every image block.

The approach can comprise a learning phase applied on a testing dataset of further digital images with different properties recorded by a set of capturing systems associated with the capturer 901. This phase can have the objective of estimating and graphically approximating a dependency of a noise standard deviation on a plurality of image feature measures, e.g. luminosity, gradient, and/or texture, assuming a de-noised ground truth digital image is available. The de-noised ground truth digital image can be determined e.g. by averaging a plurality of further digital images depicting the same scene and can be performed by the averager 903. As a result, a parametric model can be computed by the mapper 905. The mapper 905 can determine a standard deviation in dependence of image feature measures characterizing the block at hand. This way, each block can be assigned an individual standard deviation describing a comprised noise level.

A capturing of n noisy digital image frames of further digital images of a static scene can be realized in the same conditions by the capturer 901. Only a single digital image of the recorded noisy digital images may be used as a noisy input digital image. The averaging carried out by the averager 903 can be aimed at computing an approximate ground truth, e.g. noise-free, digital image. The noise modeling can be carried out by the mapper 905 depending on the chosen image feature measure, e.g. luminosity, gradient, and/or color ramp, or a combination of image feature measures in order to define the mapping. In this example, an intensity-to-noise mapping is provided.

In an embodiment of the invention, the noise modeling is performed offline and the output, e.g. a measure-to-noise mapping, is stored or pre-defined before applying the de-noising approach. The de-noising can be performed online, i.e. on-the-fly.

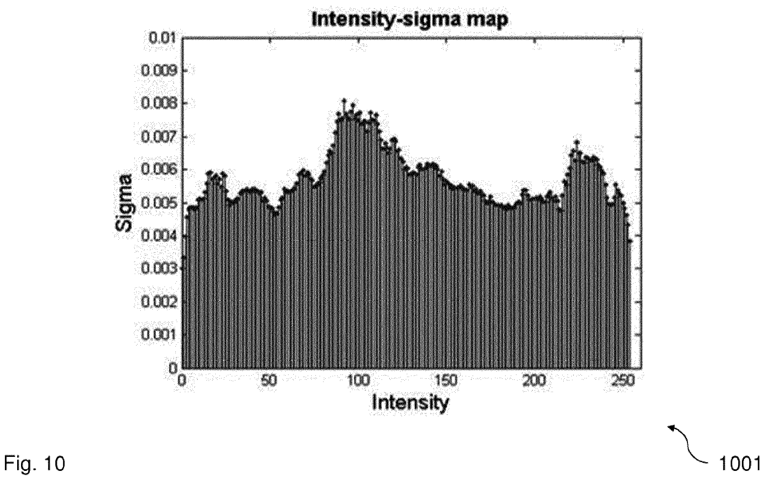

Fig. 10 shows a diagram of a plurality of stored image feature measures and a plurality of stored noise indicators being arranged to form a measure-to-noise map 1001 according to an embodiment. The plurality of stored image feature measures, the plurality of stored noise indicators, and/or the measure-to-noise map 1001 can be stored in a memory of the image processing apparatus 100. The diagram illustrates a measure-to-noise mapping, in particular an intensity-to-sigma mapping. The noise is indicated by a corresponding standard deviation.

When a categorization of a digital image sensor is performed on the basis of a local image feature measure, e.g. based on an intensity measure in color-space or grayscale, corresponding pixels having the same intensity can be assigned to the same cluster. For each single cluster, the noise standard deviation can be estimated determining the corresponding noise level. The mapping e.g. between luminosity cluster I and standard deviation $\sigma$ of the noise distribution can mathematically be described by I $\rightarrow \sigma$ and the standard deviation $\sigma$ can be described as a function $\sigma$ (I).

Embodiments of the invention can be directed to adapting block-based approaches for denoising to achieve an adaptive de-noising of digital images comprising non-stationary Gaussian noise. The approach can be employed for digital image de-noising comprising, given a certain digital image sensor, the following steps: learning of noise statistics given a single image feature measure or a combination of associated image feature measures, e.g. luminosity, texture, and/or color, applying a block based de-noising mechanism with filtering on high-frequencies, and an adaptive de-noising applying threshold mechanisms or statistical filtering mechanisms on the basis of the learned statistics.

The determination of a noise level of a block, e.g. $\sigma_r$ or $\sigma_s$, can be performed within the noise modeling. The noise level can be computed offline. A learning phase can be applied on a predetermined set of further digital images, e.g. testing images, in order to learn noise standard deviation values depending on a plurality of image feature measures, e.g. luminosity, texture, and/or color, under noise considerations. This can be performed offline. For example, the measure-to-noise map or histogram can be computed offline and can be pre-stored. Thus, the noise modeling can be performed offline and the measure-to-noise mapping can be stored or predetermined before applying the de-noising.

Given an input digital image, the actual de-noising can be performed by considering offline learned noise standard deviations. That is, for each block of the input digital image, the value of $\sigma$ can be determined based on actual image feature measures such as luminosity, gradient, texture, and other parameters of the corresponding block, which can be mapped onto the pre-stored map or histogram. In this way, each block in the input digital image can be assigned an individual standard deviation depending on the noise level. This can be performed online, i.e. on-the-fly. Based on the assigned $\sigma$ values of the blocks, the best matching and/or similar blocks for each reference block can be selected according to the provided equation regarding similarity measures.

Throughout the description, the following definitions of acronyms and glossaries are used: 3D denotes three-dimensional space, a digital image denotes a visual representation of a real world or synthetic scene by a digital camera and can also be referred to as a picture, a pixel denotes the smallest addressable image or picture element, a block denotes a block of pixels extracted from an image, a 3D array denotes an array comprising similar blocks stacked over each other, a sparse signal denotes a signal that can be described by only few coefficients in a transform domain, block matching denotes an approach or algorithm to search for similar blocks with regard to a reference block within a digital image, collaborative filtering denotes a filtering approach, wherein instead of considering a single block to filter, multiple blocks stacked on top of each other, forming a 3D array, can jointly be filtered with keeping into consideration a correlation among them, aggregation denotes a weighted averaging of different intensity estimates brought by overlapping blocks at a certain pixel position, a ground truth denotes a resulting noise-free image after averaging a set of n noisy image frames of the same scene, a Gaussian distribution, also called a normal distribution, denotes a continuous symmetrical bell-shaped probability function described by a mean value $\mu$ and a positive standard deviation, a measure denotes a characteristic property in a digital image used generally to extract information from it e.g. an intensity, gradient, and/or color ramp, and can be generally correlated with a local noise level, a standard deviation denotes a value measuring an amount of variation or dispersion from a mean, and can be a reported margin of an error against a true value, a mapping denotes a graphic representation of relationships between data sets, and can be a parametric model of a correlation between an image noise and a considered measure, e.g. a gradient, luminosity, and/or color ramp, a quadratic distance denotes a distance metric quantifying a similarity between two digital images and/or blocks, and can be calculated as a norm of a pixel-wise difference between the digital images and/or blocks, and noise denotes a random, e.g. not present in the captured scene, variation of brightness, textural, gradient or color in an image.

**Claims**

**1.** An image processing apparatus (100) for processing a digital image (501), the digital image (501) comprising a reference block (R) and one or more further blocks, wherein the processing is non-local denoising of the digital image based on the reference block and the one or more further blocks, the image processing apparatus (100) comprising:

a determiner (101) being configured to determine one or more similarity measures between the reference block and the one or more further blocks, wherein each similarity measure indicates a similarity between a noise distribution in the reference block and a noise distribution in a further block of the one or more further blocks, the determiner (101) being further configured to determine one or more similar blocks from the one or more further blocks upon the basis of the one or more similarity measures;
wherein each similarity measure further indicates a similarity between an intensity distribution in the reference block and an intensity distribution in the further block of the one or more further blocks;
wherein the determiner (101) is configured to determine a reference noise indicator indicating the noise distribution in the reference block, to determine one or more further noise indicators indicating the noise distributions in the one or more further blocks, and to combine the reference noise indicator with the one or more further noise indicators to determine the one or more similarity measures between the reference block and the one or more further blocks;
wherein the determiner (101) is configured to determine a reference image feature measure, in particular an average intensity, of the reference block, to determine one or more further image feature measures, in particular average intensities, of the one or more further blocks, to determine the reference noise indicator upon the basis of the reference image feature measure, and to determine the one or more further noise indicators upon the basis of the one or more further image feature measures;
wherein the apparatus further comprises a memory, wherein the memory is configured to store one or more stored image feature measures and one or more stored noise indicators, wherein each stored image feature measure is associated with a stored noise indicator, and wherein the determiner (101) is configured to compare the reference image feature measure or a further image feature measure with the one or more stored image feature measures in the memory, and to retrieve a stored noise indicator from the memory being associated with a stored image feature measure corresponding to the reference image feature measure or the further image feature measure.

2. The image processing apparatus (100) of claim 1, wherein the determiner (101) is configured to partition the digital image (501) into one or more blocks, and to determine the reference block and the one or more further blocks from the one or more blocks.

3. The image processing apparatus (100) of any of the preceding claims, wherein a size of the reference block and a size of a further block of the one or more further blocks are equal.

4. The image processing apparatus (100) of any of the preceding claims, wherein the one or more further blocks is arranged within a search window area associated with the reference block, wherein the search window area comprises the reference block, and wherein the search window area has a predetermined size.

5. The image processing apparatus (100) of any of the preceding claims, further comprising a further determiner (305), wherein the further determiner (305) is configured to determine one or more image feature measures and one or more noise indicators upon the basis of one or more further digital images, wherein each image feature measure is associated with a noise indicator, and wherein the further determiner (305) is configured to store the determined one or more image feature measures and the determined one or more noise indicators in the memory.

6. The image processing apparatus (100) of any of the preceding claims, further comprising a de-noising filter (301), the de-noising filter (301) being configured to arrange the reference block and the one or more similar blocks to form a 3-dimensional array (503), and to collaboratively filter the 3-dimensional array (503) to obtain a filtered reference block and one or more filtered similar blocks.

7. The image processing apparatus (100) of claim 6, wherein the determiner (101) is configured to determine a reference noise indicator indicating the noise distribution in the reference block, and to determine one or more further noise indicators indicating the noise distributions in the one or more further blocks, wherein the de-noising filter (301) is configured to collaboratively filter the 3-dimensional array (503) upon the basis of the reference noise indicator associated with the reference block and further noise indicators associated with the one or more similar blocks.

8. The image processing apparatus (100) of claims 6 or 7, wherein the de-noising filter (301) is configured to transform the 3-dimensional array (503) from a spatial domain into a transform domain to obtain a transformed 3-dimensional array (601), to collaboratively filter the transformed 3-dimensional array (601) in the transform domain to obtain a filtered transformed 3-dimensional array (603), and to inversely transform the filtered transformed 3-dimensional array (603) from the transform domain into the spatial domain to obtain the filtered reference block and the one or more filtered similar blocks.

9.  The image processing apparatus (100) of any of the claims 6 to 8, further comprising a combiner (303), the combiner (303) being configured to combine the filtered reference block with the one or more filtered similar blocks to obtain a de-noised digital image (805).

10. The image processing apparatus (100) of claim 9, wherein the determiner (101) is configured to determine a reference position indicator indicating a position of the reference block within the digital image (501), and to determine one or more position indicators indicating positions of the one or more similar blocks within the digital image (501), and wherein the combiner (303) is configured to combine the filtered reference block with the one or more filtered similar blocks upon the basis of the determined reference position indicator and the determined one or more position indicators.

11. A method (200) for processing a digital image (501), the digital image (501) comprising a reference block and one or more further blocks, wherein the processing is non-local denoising of the digital image based on the reference block and the one or more further blocks, the method (200) comprising:

    determining (201) one or more similarity measures between the reference block and the one or more further blocks, wherein each similarity measure indicates a similarity between a noise distribution in the reference block and a noise distribution in a further block of the one or more further blocks; and
    determining (203) one or more similar blocks from the one or more further blocks upon the basis of the one or more similarity measures;
    wherein each similarity measure further indicates a similarity between an intensity distribution in the reference block and an intensity distribution in the further block of the one or more further blocks;
    wherein the method further comprises the steps of:

       determining a reference noise indicator indicating the noise distribution in the reference block, determining one or more further noise indicators indicating the noise distributions in the one or more further blocks, and combining the reference noise indicator with the one or more further noise indicators to determine the one or more similarity measures between the reference block and the one or more further blocks;
       determining a reference image feature measure, in particular an average intensity, of the reference block, to determine one or more further image feature measures, in particular average intensities, of the one or more further blocks, to determine the reference noise indicator upon the basis of the reference image feature measure, and determining the one or more further noise indicators upon the basis of the one or more further image feature measures; and
       wherein the method further comprises:
       storing one or more stored image feature measures and one or more stored noise indicators in a memory, wherein each stored image feature measure is associated with a stored noise indicator, and comparing the reference image feature measure or a further image feature measure with the one or more stored image feature measures in the memory, and to retrieve a stored noise indicator from the memory being associated with a stored image feature measure corresponding to the reference image feature measure or the further image feature measure.

**Patentansprüche**

1.  Bildverarbeitungsvorrichtung (100) zum Verarbeiten eines digitalen Bildes (501), wobei das digitale Bild (501) einen Referenzblock (R) und einen oder mehrere weitere Blöcke umfasst, wobei die Verarbeitung eine nichtlokale Rauschunterdrückung des digitalen Bildes auf der Grundlage des Referenzblocks und des einen oder der mehreren weiteren Blöcke ist, wobei die Bildverarbeitungsvorrichtung (100) umfasst:

    Bestimmungsvorrichtung (101), die dafür ausgelegt ist, eine oder mehrere Ähnlichkeitsmaße zwischen dem Referenzblock und dem einen oder den mehreren weiteren Blöcken zu bestimmen, wobei jedes Ähnlichkeitsmaß eine Ähnlichkeit zwischen einer Rauschverteilung im Referenzblock und einer Rauschverteilung in einem weiteren Block des einen oder der mehreren weiteren Blöcke angibt, wobei die Bestimmungsvorrichtung (101) ferner dafür ausgelegt ist, einen oder mehrere ähnliche Blöcke aus dem einen oder den mehreren weiteren Blöcken auf der Grundlage des einen oder der mehreren Ähnlichkeitsmaße zu bestimmen;

wobei jedes Ähnlichkeitsmaß ferner eine Ähnlichkeit zwischen einer Intensitätsverteilung im Referenzblock und einer Intensitätsverteilung im weiteren Block des einen oder der mehreren weiteren Blöcke angibt;

wobei die Bestimmungsvorrichtung (101) dafür ausgelegt ist, einen Referenzrauschindikator zu bestimmen, der die Rauschverteilung im Referenzblock angibt, um einen oder mehrere weitere Rauschindikatoren zu bestimmen, die die Rauschverteilungen in dem einen oder den mehreren weiteren Blöcken angeben, und um den Referenzrauschindikator mit dem einen oder den mehreren weiteren Rauschindikatoren zu kombinieren, um die einen oder die mehreren Ähnlichkeitsmaße zwischen dem Referenzblock und dem einen oder den mehreren weiteren Blöcken zu bestimmen;

wobei die Bestimmungsvorrichtung (101) dafür ausgelegt ist, ein Referenzbildmerkmalsmaß, insbesondere eine durchschnittliche Intensität, des Referenzblocks zu bestimmen, um ein oder mehrere weitere Bildmerkmalsmaße, insbesondere Durchschnittsintensitäten, des einen oder der mehreren weiteren Blöcke zu bestimmen, um den Referenzrauschindikator auf der Grundlage des Referenzbildmerkmalsmaßes zu bestimmen, und um den einen oder die mehreren weiteren Rauschindikatoren auf der Grundlage des einen oder der mehreren weiteren Bildmerkmalsmaße zu bestimmen;

wobei die Vorrichtung ferner einen Speicher umfasst, wobei der Speicher dafür ausgelegt ist, ein oder mehrere gespeicherte Bildmerkmalsmaße und einen oder mehrere gespeicherte Rauschindikatoren zu speichern, wobei jedes gespeicherte Bildmerkmalsmaß einem gespeicherten Rauschindikator zugeordnet ist, und wobei die Bestimmungsvorrichtung (101) dafür ausgelegt ist, das Referenzbildmerkmalsmaß oder ein weiteres Bildmerkmalsmaß mit dem einen oder den mehreren gespeicherten Bildmerkmalsmaßen im Speicher zu vergleichen und einen gespeicherten Rauschindikator aus dem Speicher abzurufen, der einem gespeicherten Bildmerkmalsmaß entsprechend dem Referenzbildmerkmalsmaß oder dem weiteren Bildmerkmalsmaß zugeordnet ist.

2. Bildverarbeitungsvorrichtung (100) nach Anspruch 1, wobei die Bestimmungsvorrichtung (101) dafür ausgelegt ist, das digitale Bild (501) in einen oder mehrere Blöcke aufzuteilen und den Referenzblock und die einen oder mehreren weiteren Blöcke aus dem einen oder den mehreren Blöcken zu bestimmen.

3. Bildverarbeitungsvorrichtung (100) nach einem der vorhergehenden Ansprüche, wobei eine Größe des Referenzblocks und eine Größe eines weiteren Blocks des einen oder der mehreren weiteren Blöcke gleich sind.

4. Bildverarbeitungsvorrichtung (100) nach einem der vorhergehenden Ansprüche, wobei der eine oder die mehreren weiteren Blöcke innerhalb eines dem Referenzblock zugeordneten Suchfensterbereichs angeordnet sind, wobei der Suchfensterbereich den Referenzblock umfasst, und wobei der Suchfensterbereich eine vorbestimmte Größe aufweist.

5. Bildverarbeitungsvorrichtung (100) nach einem der vorhergehenden Ansprüche, ferner umfassend eine weitere Bestimmungsvorrichtung (305), wobei die weitere Bestimmungsvorrichtung (305) dafür ausgelegt ist, ein oder mehrere Bildmerkmalsmaße und einen oder mehrere Rauschindikatoren auf der Grundlage eines oder mehrerer weiterer digitaler Bilder zu bestimmen, wobei jedes Bildmerkmalsmaß einem Rauschindikator zugeordnet ist, und wobei die weitere Bestimmungsvorrichtung (305) dafür ausgelegt ist, das ermittelte eine oder die mehreren Bildmerkmalsmaße und den ermittelten einen oder die mehreren Rauschindikatoren im Speicher zu speichern.

6. Bildverarbeitungsvorrichtung (100) nach einem der vorhergehenden Ansprüche, ferner umfassend einen Rauschunterdrückungsfilter (301), wobei der Rauschunterdrückungsfilter (301) dafür ausgelegt ist, den Referenzblock und einen oder mehrere ähnliche Blöcke anzuordnen, um eine dreidimensionale Anordnung (503) zu bilden, und um die dreidimensionale Anordnung (503) zusammenwirkend zu filtern, um einen gefilterten Referenzblock und einen oder mehrere gefilterte ähnliche Blöcke zu erhalten.

7. Bildverarbeitungsvorrichtung (100) nach Anspruch 6, wobei die Bestimmungsvorrichtung (101) dafür ausgelegt ist, einen Referenzrauschindikator zu bestimmen, der die Rauschverteilung im Referenzblock angibt, und einen oder mehrere weitere Rauschindikatoren zu bestimmen, die die Rauschverteilungen in dem einen oder den mehreren weiteren Blöcken angeben, wobei der Rauschunterdrückungsfilter (301) dafür ausgelegt ist, die dreidimensionale Anordnung (503) auf der Grundlage des Referenzrauschindikators, der dem Referenzblock zugeordnet ist, und weiterer Rauschindikatoren, die dem einen oder den mehreren ähnlichen Blöcken zugeordnet sind, zusammenwirkend zu filtern.

**8.** Bildverarbeitungsvorrichtung (100) nach Anspruch 6 oder 7, wobei der Rauschunterdrückungsfilter (301) dafür ausgelegt ist, die dreidimensionale Anordnung (503) von einer räumlichen Domäne in eine Transformationsdomäne zu transformieren, um eine transformierte dreidimensionale Anordnung (601) zu erhalten, um die transformierte dreidimensionale Anordnung (601) in der Transformationsdomäne zusammenwirkend zu filtern, um eine gefilterte transformierte dreidimensionale Anordnung (603) zu erhalten, und um die gefilterte transformierte dreidimensionale Anordnung (603) von der Transformationsdomäne umgekehrt in die räumliche Domäne zu transformieren, um den gefilterten Referenzblock und die einen oder mehreren gefilterten ähnlichen Blöcke zu erhalten.

**9.** Bildverarbeitungsvorrichtung (100) nach einem der Ansprüche 6 bis 8, ferner umfassend eine Kombinationsvorrichtung (303), wobei die Kombinationsvorrichtung (303) dafür ausgelegt ist, den gefilterten Referenzblock mit dem einen oder den mehreren gefilterten ähnlichen Blöcken zu kombinieren, um ein entrauschtes digitales Bild (805) zu erhalten.

**10.** Bildverarbeitungsvorrichtung (100) nach Anspruch 9, wobei die Bestimmungsvorrichtung (101) dafür ausgelegt ist, einen Referenzpositionsindikator zu bestimmen, der eine Position des Referenzblocks im digitalen Bild (501) angibt, und um einen oder mehrere Positionsindikatoren zu bestimmen, die Positionen des einen oder der mehreren ähnlichen Blöcke im digitalen Bild (501) angeben, und wobei die Kombinationsvorrichtung (303) dafür ausgelegt ist, den gefilterten Referenzblock mit dem einen oder den mehreren gefilterten ähnlichen Blöcken auf der Grundlage des ermittelten Referenzpositionsindikators und des ermittelten einen oder der mehreren Positionsindikatoren zu kombinieren.

**11.** Verfahren (200) zum Verarbeiten eines digitalen Bildes (501), wobei das digitale Bild (501) einen Referenzblock und einen oder mehrere weitere Blöcke umfasst, wobei die Verarbeitung eine nichtlokale Rauschunterdrückung des digitalen Bildes auf der Grundlage des Referenzblocks und des einen oder der mehreren weiteren Blöcke ist, wobei das Bildverarbeitungsverfahren (200) Folgendes umfasst:

Bestimmen (201) eines oder mehrerer Ähnlichkeitsmaße zwischen dem Referenzblock und dem einen oder den mehreren weiteren Blöcken, wobei jedes Ähnlichkeitsmaß eine Ähnlichkeit zwischen einer Rauschverteilung im Referenzblock und einer Rauschverteilung in einem weiteren Block des einen oder der mehreren weiteren Blöcke angibt; und
Bestimmen (203) eines oder mehrerer ähnlicher Blöcke aus dem einen oder den mehreren weiteren Blöcken auf der Grundlage des einen oder der mehreren Ähnlichkeitsmaße;
wobei jedes Ähnlichkeitsmaß ferner eine Ähnlichkeit zwischen einer Intensitätsverteilung im Referenzblock und einer Intensitätsverteilung im weiteren Block des einen oder der mehreren weiteren Blöcke angibt;
wobei das Verfahren ferner die folgenden Schritte umfasst:

Bestimmen eines Referenzrauschindikators, der die Rauschverteilung im Referenzblock anzeigt, Bestimmen eines oder mehrerer weiterer Rauschindikatoren, die die Rauschverteilungen in dem einen oder den mehreren weiteren Blöcken anzeigen, und Kombinieren des Referenzrauschindikators mit dem einen oder den mehreren weiteren Rauschindikatoren, um das eine oder die mehreren Ähnlichkeitsmaße zwischen dem Referenzblock und dem einen oder den mehreren weiteren Blöcken zu bestimmen;
Bestimmen eines Referenzbildmerkmals, insbesondere einer durchschnittlichen Intensität, des Referenzblocks, um ein oder mehrere weitere Bildmerkmalsmaße, insbesondere Durchschnittsintensitäten, des einen oder der mehreren weiteren Blöcke zu bestimmen, um den Referenzrauschindikator auf der Grundlage des Referenzbildmerkmalsmaßes zu bestimmen, und Bestimmen der einen oder mehreren weiteren Rauschindikatoren auf der Grundlage des einen oder der mehreren weiteren Bildmerkmalsmaße; und
wobei das Verfahren ferner umfasst:
Speichern eines oder mehrerer gespeicherter Bildmerkmalsmaße und eines oder mehrerer gespeicherter Rauschindikatoren in einem Speicher, wobei jedes gespeicherte Bildmerkmalsmaß einem gespeicherten Rauschindikator zugeordnet ist, und Vergleichen des Referenzbildmerkmalsmaßes oder eines weiteren Bildmerkmalsmaßes mit dem einen oder den mehreren gespeicherten Bildmerkmalsmaßen im Speicher, und Abrufen eines gespeicherten Rauschindikators aus dem Speicher, der einem gespeicherten Bildmerkmalsmaß entsprechend dem Referenzbildmerkmalsmaß oder dem weiteren Bildmerkmalsmaß zugeordnet ist.

**Revendications**

1. Appareil de traitement d'image (100) pour traiter une image numérique (501), l'image numérique (501) comportant un bloc de référence (R) et un ou plusieurs autres blocs, dans lequel le traitement est un débruitage non local de l'image numérique basé sur le bloc de référence et le ou les autres blocs, l'appareil de traitement d'image (100) comprenant :

   un dispositif de détermination (101) qui est configuré pour déterminer une ou plusieurs mesures de similarité entre le bloc de référence et le ou les autres blocs, dans lequel chaque mesure de similarité indique une similarité entre une distribution de bruit dans le bloc de référence et une distribution de bruit dans un autre bloc du ou des autres blocs, le dispositif de détermination (101) étant en outre configuré pour déterminer un ou plusieurs blocs similaires parmi le ou les autres blocs sur la base de la ou des mesures de similarité ;
   dans lequel chaque mesure de similarité indique en outre une similarité entre une distribution d'intensité dans le bloc de référence et une distribution d'intensité dans l'autre bloc du ou des autres blocs ;
   dans lequel le dispositif de détermination (101) est configuré pour déterminer un indicateur de bruit de référence indiquant la distribution de bruit dans le bloc de référence, pour déterminer un ou plusieurs autres indicateurs de bruit indiquant les distributions de bruit dans le ou les autres blocs et pour combiner l'indicateur de bruit de référence avec le ou les autres indicateurs de bruit pour déterminer la ou les mesures de similarité entre le bloc de référence et le ou les autres blocs ;
   dans lequel le dispositif de détermination (101) est configuré pour déterminer une mesure de caractéristique d'image de référence, en particulier une intensité moyenne, du bloc de référence pour déterminer une ou plusieurs autres mesures de caractéristique d'image, en particulier des intensités moyennes, du ou des autres blocs, pour déterminer l'indicateur de bruit de référence sur la base de la mesure de caractéristique d'image de référence et pour déterminer le ou les autres indicateurs de bruit sur la base de la ou des autres mesures de caractéristique d'image ;
   l'appareil comprenant en outre une mémoire, dans lequel la mémoire est configurée pour stocker une ou plusieurs mesures de caractéristique d'image stockées et un ou plusieurs indicateurs de bruit stockés, dans lequel chaque mesure de caractéristique d'image stockée est associée à un indicateur de bruit stocké et dans lequel le dispositif de détermination (101) est configuré pour comparer la mesure de caractéristique d'image de référence ou une autre mesure de caractéristique d'image avec la ou les mesures de caractéristique d'image stockées dans la mémoire et pour récupérer un indicateur de bruit stocké à partir de la mémoire qui est associée à une mesure de caractéristique d'image stockée correspondant à la mesure de caractéristique d'image de référence ou à l'autre mesure de caractéristique d'image.

2. Appareil de traitement d'image (100) selon la revendication 1, dans lequel le dispositif de détermination (101) est configuré pour diviser l'image numérique (501) en un ou plusieurs blocs et pour déterminer le bloc de référence et le ou les autres blocs à partir du ou des blocs.

3. Appareil de traitement d'image (100) selon l'une quelconque des revendications précédentes, dans lequel une taille du bloc de référence et une taille d'un autre bloc du ou des autres blocs sont égales.

4. Appareil de traitement d'image (100) selon l'une quelconque des revendications précédentes, dans lequel le ou les autres blocs sont agencés à l'intérieur d'une zone de fenêtre de recherche associée au bloc de référence, dans lequel la zone de fenêtre de recherche comprend le bloc de référence, et dans lequel la zone de fenêtre de recherche présente une taille prédéterminée.

5. Appareil de traitement d'image (100) selon l'une quelconque des revendications précédentes, comprenant en outre un autre dispositif de détermination (305), dans lequel l'autre dispositif de détermination (305) est configuré pour déterminer une ou plusieurs mesures de caractéristique d'image et un ou plusieurs indicateurs de bruit sur la base d'une ou de plusieurs autres images numériques, dans lequel chaque mesure de caractéristique d'image est associée à un indicateur de bruit et dans lequel l'autre dispositif de détermination (305) est configuré pour stocker la ou les mesures de caractéristique d'image déterminées et le ou les indicateurs de bruit déterminés dans la mémoire.

6. Appareil de traitement d'image (100) selon l'une quelconque des revendications précédentes, comprenant en outre un filtre de débruitage (301), dans lequel le filtre de débruitage (301) est configuré pour agencer le bloc de référence et le ou les blocs similaires pour former un réseau tridimensionnel (503) et pour filtrer de manière collaborative le réseau tridimensionnel (503) pour obtenir un bloc de référence filtré et un ou plusieurs blocs similaires filtrés.

7. Appareil de traitement d'image (100) selon la revendication 6, dans lequel le dispositif de détermination (101) est configuré pour déterminer un indicateur de bruit de référence indiquant la distribution de bruit dans le bloc de référence et pour déterminer un ou plusieurs autres indicateurs de bruit indiquant les distributions de bruit dans le ou les autres blocs, dans lequel le filtre de débruitage (301) est configuré pour filtrer de manière collaborative le réseau tridimensionnel (503) sur la base de l'indicateur de bruit de référence associé au bloc de référence et des autres indicateurs de bruit associés au ou aux blocs similaires.

8. Appareil de traitement d'image (100) selon les revendications 6 ou 7, dans lequel le filtre de débruitage (301) est configuré pour transformer le réseau tridimensionnel (503) d'un domaine spatial en un domaine de transformée pour obtenir un réseau tridimensionnel transformé (601), pour filtrer de manière collaborative le réseau tridimensionnel transformé (601) dans le domaine de transformée pour obtenir un réseau tridimensionnel transformé filtré (603) et pour transformer de manière inverse le réseau tridimensionnel transformé filtré (603) du domaine de transformée en domaine spatial pour obtenir le bloc de référence filtré et le ou les blocs similaires filtrés.

9. Appareil de traitement d'image (100) selon l'une quelconque des revendications 6 à 8, comprenant en outre un combinateur (303), le combinateur (303) étant configuré pour combiner le bloc de référence filtré avec le ou les blocs similaires filtrés pour obtenir une image numérique débruitée (805).

10. Appareil de traitement d'image (100) selon la revendication 9 dans lequel le dispositif de détermination (101) est configuré pour déterminer un indicateur de position de référence indiquant une position du bloc de référence dans l'image numérique (501) et pour déterminer un ou plusieurs indicateurs de position indiquant des positions du ou des blocs similaires dans l'image numérique (501) et dans lequel le combinateur (303) est configuré pour combiner le bloc de référence filtré avec le ou les blocs similaires filtrés sur la base de l'indicateur de position de référence déterminé et du ou des indicateurs de position déterminés.

11. Procédé (200) pour traiter une image numérique (501), l'image numérique (501) comprenant un bloc de référence et un ou plusieurs autres blocs, dans lequel le traitement est un débruitage non local de l'image numérique basé sur le bloc de référence et le ou les autres blocs, le procédé (200) consistant :

à déterminer (201) une ou plusieurs mesures de similarité entre le bloc de référence et le ou les autres blocs, dans lequel chaque mesure de similarité indique une similarité entre une distribution de bruit dans le bloc de référence et une distribution de bruit dans un autre bloc du ou des autres blocs ; et
à déterminer (203) un ou plusieurs blocs similaires parmi le ou les autres blocs sur la base de la ou des mesures de similarité ;
dans lequel chaque mesure de similarité indique en outre une similarité entre une distribution d'intensité dans le bloc de référence et une distribution d'intensité dans l'autre bloc du ou des autres blocs ;
le procédé comprenant en outre les étapes consistant :

à déterminer un indicateur de bruit de référence indiquant la distribution de bruit dans le bloc de référence, à déterminer un ou plusieurs autres indicateurs de bruit indiquant les distributions de bruit dans le ou les autres blocs et à combiner l'indicateur de bruit de référence avec le ou les autres indicateurs de bruit pour déterminer la ou les mesures de similarité entre le bloc de référence et le ou les autres blocs ;
à déterminer une mesure de caractéristique d'image de référence, en particulier une intensité moyenne, du bloc de référence pour déterminer une ou plusieurs autres mesures de caractéristique d'image, en particulier des intensités moyennes, du ou des autres blocs, pour déterminer l'indicateur de bruit de référence sur la base de la mesure de caractéristique d'image de référence et à déterminer le ou les autres indicateurs de bruit sur la base de la ou des autres mesures de caractéristique d'image ; et
le procédé consiste en outre :
à stocker dans une mémoire une ou plusieurs mesures de caractéristique d'image stockées et un ou plusieurs indicateurs de bruit stockés, dans lequel chaque mesure de caractéristique d'image stockée est associée à un indicateur de bruit stocké et à comparer la mesure de caractéristique d'image de référence ou une autre mesure de caractéristique d'image avec la ou les mesures de caractéristique d'image stockées dans la mémoire et à récupérer un indicateur de bruit stocké à partir de la mémoire qui est associée à une mesure de caractéristique d'image stockée correspondant à la mesure de caractéristique d'image de référence ou à l'autre mesure de caractéristique d'image.

EP 3 132 418 B1

Determiner

101

Image processing apparatus

100

Fig. 1

```
┌─────────────────────────────────────┐
│            Determining               │ ── 201
└─────────────────────────────────────┘
                   │
┌─────────────────────────────────────┐
│            Determining               │ ── 203
└─────────────────────────────────────┘
```

Fig. 2

200

Fig. 3

Input Digital Image

Find next reference block — 401

Reference block

Search for similar blocks within the input digital image (decision based on similarity measures) — 403

Similar blocks w.r.t. the reference block

Stacking — 405

3D array

Add the "3D array + block coordinates" to an output list — 407

— 101

3D Arrays, coordinates of all blocks

Fig. 4

503

3D array

R

501

Block Matching

Fig. 5

EP 3 132 418 B1

503　　　　　　　　601　　　　　　　603　　　　　　　6

3D Transform　　　　Filtering　　　　Inverse 3D Transform

Spatial Domain　　　　Transform Domain　　　　Spatial Domain

Fig. 6

3D arrays

Select next 3D array

701

3D Array

3D Transform

703

3D Array in transform
domain

Filtering

705

Filtered 3D Array in
transform domain

Inverse 3D Transform

707

Filtered 3D Array in
spatial domain

Add filtered 3D array in
output list

709

301

3D arrays with estimated
noise-reduced blocks

Fig. 7

805

803

801

Aggregation

605

Fig. 8

Fig. 9

EP 3 132 418 B1

Fig. 10

1001

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **K. DABOV ; A. FOI ; V. KATVONIK ; K. EGIAZAR-IAN.** Image Denoising by Sparse 3D Transform-Domain Collaborative Filtering. *IEEE Image Processing,* 2007, vol. 16 (8), 2080-2095

- **A. BUADES ; B. COLL ; J. M. MOREL.** A non-local algorithm for image denoising. *IEEE Computer Vision and Pattern Recognition 2005,* 2005, vol. 2, 60-65